# EUROPEAN PATENT SPECIFICATION

(11) **EP 1 099 384 B1**
(45) Date of publication and mention of the grant of the patent: **31.03.2004**
(21) Application number: 00203945.1
(22) Date of filing: 09.11.2000
(51) Int. Cl.: A23C 9/152, A23F 5/24, B65D 83/16

(54) **Aerosol for dispensing milk foam**
Aerosol zur Ausgabe von Milchschaum
Aérosol pour la distribution de mousse de lait

(30) Priority: 09.11.1999 NL 1013533
(43) Date of publication of application: 16.05.2001
(73) Proprietor: CAMPINA MELKUNIE B.V., NL-5301 LB Zaltbommel (NL)
(72) Inventor: Verbeek, Larissa Maria Ignatia, 3022 NE Rotterdam (NL); Boonstra, Maarten Peter Nicolaas, 4706 KK Roosendaal (NL); Nuijten-Pustjens, Gerry Maria Gertruda Johanna, 4614 HE Bergen op Zoom (NL)
(74) Representative: Wittop Koning, Tom Hugo

(56) References cited:
- EP-A- 0 747 301
- EP-A- 1 013 174
- WO-A-97/33813
- WO-A-99/15434
- US-A- 4 851 239
- PATENT ABSTRACTS OF JAPAN vol. 016, no. 273 (C-0953), 18 June 1992 (1992-06-18) & JP 04 071462 A (DAIWA CAN CO LTD), 6 March 1992 (1992-03-06)

## Description

The present invention relates to an aerosol according to claim 1, and to a method for making cappuccino using this aerosol.

An aerosol for making cappuccino is described in W099/15434. This aerosol accommodates thickened milk or a milk substitute, as well as a propellant gas which is dissolved in the liquid contents of the aerosol. The outlet volume of the said aerosol is over 500 mm³. To obtain a foam, a star-shaped component with a central axial bore of a diameter of approximately 1 mm and at least one adjacent radial bore of smaller diameter is positioned between the dispensing passage for the aerosol contents and the shut-off valve. The cross-sectional area of the dispensing passage is significantly greater than that of the central bore (16.6 mm² and 0.8 mm², respectively). Foaming is achieved by forcing the liquid contents of the aerosol through this star-shaped element, the foam being formed in the dispensing passage. The contents of this aerosol from the prior art are limited to thickened milk products, such as milk concentrate and milk to which vegetable fat has been added.

The invention provides an improved aerosol of the above type which can be used to dispense an attractive milk foam, without the contents of the aerosol being limited and which can also be used to dispense ordinary milk and skimmed milk, even diluted with water, for example, in the form of an attractive foam. For this purpose, the aerosol according to the invention is characterized in that the outlet volume is at most 200 mm³, and in that the cross-sectional area of the dispensing opening is at least 2 mm².

The term "outlet volume" is defined as the volume of the passage between the shut-off valve and the dispensing opening. If the dispensing passage directly adjoins the shut-off valve, this outlet volume is equal to the volume of the said dispensing passage. The outlet volume of the aerosol described in W099/15434 is therefore formed by the volume of the passages of the star-shaped element and of the dispensing passage. It has been found that if the dispensing volume is more than 200 mm³, it is impossible to form an attractive foam unless, as already indicated above, complicated structures are positioned between the shut-off valve and the dispensing passage. The small outlet volume also has the advantage that little milk remains in the dispensing passage after dispensing and there will be little if any leakage of this milk from the dispensing passage.

An aerosol for forming milk foam is also known from W097/33813. An aerosol of this type accommodates a milk product which can be sprayed into coffee at high speed in the form of a jet with a diameter of at most 1 mm, with the result that a layer of foam is formed on the coffee. The risk of spillage is high with this method of making foam.

It has been found that the said aerosol can be used to make an attractive foam if condensed milk is accommodated in the aerosol. However, real cappuccino foam is made from ordinary milk (such as for example skimmed, semi-skimmed, full-cream, pasteurized, sterilized or UHT milk). With professional equipment such as that which is used in the catering trade, cappuccino milk foam is formed by passing pressurized steam through milk.

However, for domestic use milk foam for cappuccino is not usually prepared using steam, but rather by beating boiled milk using a whisk or by using special, commercially available milk beaters and/or the microwave oven. However, these methods of making milk foam are laborious, and the equipment used has to be washed. The commercially available ready-to-use instant cappuccino is not an alternative, since both the foam and the taste are of lower quality.

It has been found that with a liquid composition as described above, dispensed from an aerosol according to the invention with an overrun percentage of between 50 and 300, it is possible to form a stable and dry milk foam which is comparable to foam produced using steam.

If the overrun is more than 300, the expansion is too great and the result is a milk foam which is perceived to be too airy and less suitable for making cappuccino. If the overrun percentage is below 50%, the foam formation is insufficient.

The term overrun percentage is understood as meaning the percentage volume increase of the milk when it is dispensed from the aerosol compared to its volume before it is dispensed. If the overrun percentage is 50, the volume of the milk foam dispensed is therefore 1.5 times the volume of the milk in the aerosol.

The term "aerosol" is intended to mean any package which is provided with a dispensing valve and accommodates a product which is metered out of the package in a controlled way with the aid of energy supplied or included in the package as a result of the valve being opened. However a conventional aerosol is preferred. Numerous ways of achieving the desired overrun percentage are known in the specialist field. In this context, reference is made to the handbook "The Science and Technology of Aerosol Packaging", Ed. J.J. Sciarra and L. Stoller, John Wiley and Sons, USA, 1974.

The term milk product is understood as meaning any form of milk which is known in the specialist field, such as for example skimmed milk, semi-skimmed milk, full-cream milk, pasteurized milk, sterilized milk, UHT milk, condensed milk, low-lactose milk, vegetable-based milk (for example soya milk), thickened milk and milk made up from powered milk, or mixtures thereof. In principle, the milk comes from the cow, although the invention is not limited only to cow's milk; by way of example, it is possible, if desired, to accommodate goat's milk or sheep's milk in the aerosol according to the invention. The milk product which may be accommodated in the aerosol according to the invention also includes milk which has been diluted with water or an aqueous solution. The concentration of the milk is relatively unimportant for the use of diluted milk in the aerosol according to the invention; what is important is that the diluted milk can be dispensed as a foam. Even a concentration of 5-10 v/v% milk in an aqueous solution or emulsion may lead to sufficient foam formation in the aerosol, although a milk which has been diluted to this extent does not necessarily have a discernible taste of milk anymore. For the desired foam formation, it is possible for additives to be included in the composition, such as for example milk proteins. The more milk the composition contains, the lower the levels of additives for improving the foam formation have to be.

It is also possible for the fat content, as well as the protein content, of the milk to be set to a desired level, for example by the addition of, inter alia, fat sources, such as for example milk fat, vegetable fat or cream, or protein sources, such as milk protein concentrate, whey protein concentrate, etc.

It has been found that a liquid composition according to the invention which has a viscosity of less than 20 centipoise, as is the case with milk or diluted milk, is particularly suitable for being accommodated in the aerosol according to the invention.

The outlet volume is at most 200 mm³. A small outlet volume of this level provides optimum expansion of the liquid composition from the aerosol, resulting in a very attractive and stable milk foam being obtained. Furthermore, little if any liquid composition will leak out of a dispensing passage of small volume after dispensing, even if the aerosol is shaken. The outlet volume is preferably at least 10 mm³; with a lower outlet volume, the foam formation may cause problems. The outlet volume is more preferably at least 50 mm³.

Furthermore, the area of the dispensing opening of the dispensing nozzle is preferably not too small, since in that case the milk is dispensed from the aerosol in the form of a hard jet, so that the correct expansion takes place less readily and the desired overrun is not achieved. Therefore, the surface area of the dispensing opening of the dispensing nozzle is preferably 2-4 mm², more preferably at least 3 mm² and most preferably 3 mm². It is most preferable to use a nozzle whose dispensing opening has a diameter of between 2 and 3 mm. In this context, it is also advantageous if the area of the cross section of the dispensing passage between the dispensing valve of the aerosol and the dispensing opening is at least as large as that of the area of the dispensing opening.

This means that in that case there are no narrowed sections in the passage between the dispensing valve and the dispensing opening. In an attractive embodiment, the dispensing device in the aerosol according to the invention is designed in such a manner that the composition, when it is being dispensed, everywhere in the passage between the shut-off valve and the dispensing opening has a movement direction component in the direction of the dispensing opening which is axial with respect to the aerosol. When the valve is opened, the contents of the aerosol are brought into communication with the passage and will be dispensed to the environment via the dispensing passage and through the dispensing opening. Optimum expansion of the foam has been found to occur if the foam, when it is being dispensed, in the passage is always moving in the direction of the dispensing opening. Although it is possible for baffles to be positioned in the dispensing passage, the angle of these baffles must be selected in such a manner that the foam dispensed, while it is being dispensed, is always moving in the direction of the dispensing opening. The passage between the shut-off valve and dispensing opening for the milk foam which is to be dispensed is preferably unimpeded, i.e. there are no flow-obstructing means positioned in the passage. In this respect, it is highly advantageous for the dispensing passage to be positioned in such a manner that it directly adjoins the shut-off valve. The dispensing passage is preferably tubular, most preferably cylindrical.

The overrun percentage of the milk foam dispensed is preferably between 100 and 250; a foam of this type is highly stable and can scarcely if at all be distinguished from the milk foam which is obtained using professional equipment. Even more preferably, the overrun percentage is between 110 and 175.

The propellant preferably comprises a gas which substantially does not dissolve in the milk. A propellant of this type has little if any influence on the overrun, with the result that sufficient amounts of a gas of this type to propel a satisfactory amount of the milk out of the aerosol can be accommodated in the aerosol. The propellant is preferably compressed air, nitrogen or a mixture thereof, with nitrogen being most preferable. In this way, it is possible to obtain a milk foam of very open character, i.e. a foam which has both small and relatively large gas bubbles, which is extremely suitable as a cappuccino foam. Without wishing to be tied to any explanation, it is believed that nitrogen forms nucleation centres in the dispensed milk, onto which gas bubbles can grow as a result of the pressure drop while the milk is being sprayed out. It has also been found that a very stable foam is formed if nitrogen is used.

To achieve the correct overrun, a suitable amount of expanding agent has to be accommodated in the aerosol, which expanding agent preferably dissolves in the gas. The preferred expanding agent is nitrous oxide, although other expanding agents may also be used, such as CO₂. In this context, reference is made to the abovementioned handbook by Sciarra and Stoller, but in particular to Japanese patent application JP 0 407 14 62, which describes an aerosol for dispensing vegetable-based whipping cream, the liquid vegetable cream being accommodated in the aerosol together with nitrogen as propellant and carbon dioxide as expanding agent; in this aerosol, the nitrogen: carbon dioxide volumetric ratio is 50-90:50-10.

Preferably, the expanding agent and the propellant are jointly formed by a mixture of nitrous oxide and nitrogen, the gas mixture preferably comprising 30-80% by weight nitrous oxide and 70-20% by weight nitrogen, preferably 40-60% by weight nitrous oxide and 60-40% by weight nitrogen, and most preferably approximately 50% by weight nitrous oxide and 50% by weight nitrogen. In this context, the term "approximately" is understood to mean a deviation of at most 5% by weight.

The total amount of gas is preferably between 1 and 6 grams of gas per 250 ml of product, packaged in an aerosol according to the invention with a brimful capacity of 405 ml. The amount is preferably 3-5 grams, most preferably approximately 4 grams. In this context, the term "approximately" is understood as meaning a deviation of at most 1 gram.

In addition to milk, the liquid composition may contain other ingredients, such as the sweeteners which are customarily used in the specialist field, such as sugar syrup and glucose syrup, colourants, flavourings, foam formers, dry milk constituents, proteins, emulsifiers, hydrocolloids and stabilizers. A composition which is to be accommodated in an aerosol according to the invention contains at least 70% by weight milk, preferably at least 75% by weight, and most preferably at least 80% by weight. Most preferably, however, the liquid composition contains as much milk as possible, i.e. 90% by weight or more.

Although in principle all types of milk which have already been mentioned above are suitable for being accommodated in an aerosol according to the invention, it has been found that with skimmed milk it is possible to obtain high-quality, tasty foam which floats on top of coffee in a very stable way and is therefore extremely suitable for the production of cappuccino with an authentic taste. Moreover, skimmed milk is also suitable for people who are following a low-calorie diet. The term skimmed milk is intended to mean milk with a fat content of at most 0.5% by weight, preferably at most 0.3% by weight.

The invention also relates to a method for making cappuccino, comprising the following steps:
- spraying the liquid composition out of an aerosol according to the invention into a container, with an overrun percentage of 50-300, preferably between 100 and 250, and even more preferably between 110 and 175, so as to form milk foam,
- filling the container with a desired amount of coffee before or after the milk is sprayed.

In this context, in addition to standard coffee the term coffee also encompasses other coffee-based drinks, such as decaffeinated coffee, instant coffee, etc.

The aerosol can therefore be used in two ways: firstly, a desired amount of coffee can be added to a cup, after which the milk foam from the aerosol is placed onto the coffee. Most preferably, however, the foam is sprayed into the cup first, and then the coffee (preferably freshly brewed) is poured into the foam. In this way, the foam retains a pleasant white colour and does not acquire a bitter coffee taste. It is also possible for the foam, once it has been sprayed into a cup, to be preheated with the aid of a microwave oven, for example.

The invention is explained in more detail below with reference to an example.

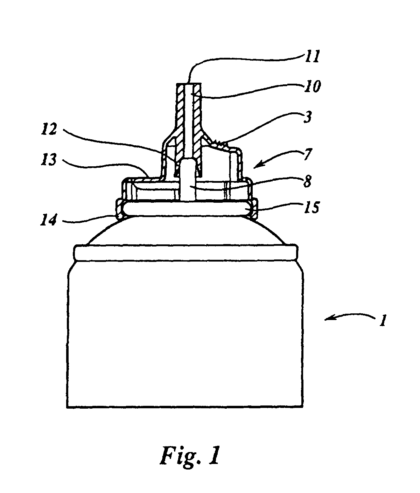

The invention will be explained in more detail below with reference to the figure, which illustrates a cross section through an aerosol 1. A plastic actuating assembly 7 is clamped around a beaded edge 15 with the aid of an inwardly directed collar 14. The aerosol is provided with a shut-off valve 8 which is pressed downwards as a result of an actuating component 3 of the actuating assembly 7 being depressed, so that the contents of the aerosol can be dispensed to the environment via a dispensing passage 10 and dispensing opening 11. In the case shown, dispensing passage 10 directly adjoins the shut-off valve 8. The outlet volume, that is to say the volume between the shut-off valve 8 and the dispensing opening 11, i.e. the volume of in this case dispensing passage 10, according to the invention is at most 600 mm³, and the cross-sectional area of the dispensing opening 11 is at least 3 mm². Although the above shows a preferred embodiment of the aerosol according to the invention, it will be clear that the invention is not limited to this embodiment and that numerous variants of, inter alia, the actuating component 3, dispensing passage 10 and dispensing opening 11 are possible. For example, the passage 10 may be widened in the intended outlet direction at the location of the dispensing opening. In the case shown, the passage between shut-off valve 8 and the dispensing opening 11 is defined by the dispensing passage; however, it is also possible for outlet-restricting and/or direction-determining means to be accommodated between the dispensing passage and the dispensing valve, although this is not preferred. However, it is most preferable for the passage to be free of such means and free of narrowed sections.

### Example

The following formulations were prepared by dissolving the dry matter in the skimmed milk, after which, if desired (formulation 2), cream was added up to the desired fat content. The percentages are expressed as percentages by weight.

| Formulation 1 | |
|---|---|
| skimmed milk | 94.50% |
| sugar | 4.00% |
| skimmed milk powder | 1.50% |

| Formulation 2 | |
|---|---|
| skimmed milk | 90.15% |
| cream 40% | 8.75% |
| whey powder | 1.00% |
| flavouring | 0.10% |

| Formulation 3 | |
|---|---|
| skimmed milk | 75% |
| maltodextrins | 4% |
| spray-dried fat powder | 3.5% |
| emulsifiers | 0.1% |
| stabilizers | 0.05% |
| whey protein concentrate | 3.0% |
| sugar | 1.0% |
| water up to | 100% |

The preparations were then sterilized by means of a UHT process and were introduced into aerosols under aseptic conditions, followed by the addition of a gas mixture of nitrous oxide and nitrogen. 250 ml were added per aerosol (brimful volume 405 ml), with the addition of 4 g gas mixture, consisting of 50% by weight nitrous oxide and 50% by weight nitrogen.

When dispensed from the corresponding aerosol, both formulations, on hot, freshly brewed coffee, formed an excellent milk foam which is indistinguishable from professionally produced cappuccino foam in terms of appearance and stability. Formulation 1 tastes sweeter, while Formulation 2 tastes creamier.

The formulations can be adjusted as desired. For example, the sugar and cream content can be changed to taste.

## Claims

1. Aerosol (1) for dispensing milk foam, comprising:
- a dispensing device, comprising a shut-off valve (8) and a dispensing passage (10) which is positioned downstream of the shut-off valve (8), as seen in the intended outlet direction of the milk foam, and has a dispensing opening (11), the volume of the passage between the shut-off valve and the dispensing opening being at most 200 mm³, and the cross-sectional area of the dispensing opening being at least 2 mm²,
- a liquid composition which comprises a milk product,
- a propellant, comprising a gas which substantially does not dissolve in the liquid composition,
- an amount of expanding agent which is such that the overrun percentage of the composition when it is dispensed from the aerosol is between 50 and 300.

2. Aerosol according to claim 1, **characterized in that** the volume of the passage between the shut-off valve and the dispensing opening is at least 10 mm³.

3. Aerosol according to one or more of the preceding claims, **characterized in that** the cross-sectional area of the dispensing opening is at most 4 mm², and is preferably 3 mm².

4. Aerosol according to one or more of the preceding claims, **characterized in that** the cross-sectional area of the passage between the shut-off valve and the dispensing opening is the same size as that of the dispensing opening.

5. Aerosol according to one or more of the preceding claims, **characterized in that** the dispensing device is designed in such a manner that the composition, when it is being dispensed, everywhere between the shut-off valve and the dispensing opening has a movement direction component in the direction of the dispensing opening which is axial with respect to the aerosol.

6. Aerosol according to one or more of the preceding claims, **characterized in that** the aerosol contains an amount of expanding agent which is such that the overrun percentage is between 100 and 250, preferably between 110 and 175.

7. Aerosol according to one or more of the preceding claims, **characterized in that** the propellant is selected from the group consisting of compressed air, nitrogen or a mixture thereof.

8. Aerosol according to one or more of the preceding claims, **characterized in that** the expanding agent and the propellant are jointly formed by a mixture of nitrous oxide and nitrogen.

9. Aerosol according to claim 8, **characterized in that** the gas mixture comprises 30-80% by weight nitrous oxide and 70-20% by weight nitrogen, preferably 40-60% by weight nitrous oxide and 60-40% by weight nitrogen, and most preferably approximately 50% by weight nitrous oxide and 50% by weight nitrogen.

10. Aerosol according to one or more of the preceding claims, **characterized in that** the liquid composition contains, at 1 atmosphere and 4°C, at least 70% by weight milk, preferably at least 80% by weight and most preferably 90% by weight or more.

11. Aerosol according to claim 10, **characterized in that** the milk is skimmed milk.

12. Method for making cappuccino, comprising the following steps:
- spraying the liquid composition out of an aerosol according to one or more of the preceding claims into a container, with an overrun percentage of 50-300, preferably between 100 and 250, and even more preferably between 110 and 175, so as to form milk foam,
- filling the container with a desired amount of coffee before or after the milk is sprayed.

## Patentansprüche

1. Sprühdose (1) zum Ausgeben von Milchschaum, umfassend:
- eine Ausgabevorrichtung umfassend ein Schließventil (8) und einen Ausgabekanal (10), der stromabwärts von dem Schließventil (8) angeordnet ist, bezogen auf die beabsichtigte Ausgaberichtung des Milchschaums, und der eine Ausgabeöffnung (11) hat, wobei das Volumen des Kanals zwischen dem Schließventil und der Ausgabeöffnung höchstens 200 m³ beträgt und die Querschnittsfläche der Ausgabeöffnung mindestens 2 mm² beträgt,
- eine flüssige Mischung, die ein Milchprodukt umfaßt,
- ein Treibmittel, das ein Gas umfaßt, das sich im wesentlichen nicht in der flüssigen Mischung löst,
- eine Menge eines Schäumungsmittels, die derart ist, daß der Auslaufprozentsatz der Mischung, wenn sie aus der Sprühdose ausgegeben wird, zwischen 50 und 300 beträgt.

2. Sprühdose nach Patentanspruch 1, **dadurch gekennzeichnet, daß** das Volumen des Kanals zwischen dem Schließventil und der Ausgabeöffnung wenigstens 10 mm³ beträgt.

3. Sprühdose nach einem oder mehreren der vorgehenden Patentansprüche, **dadurch gekennzeichnet, daß** die Querschnittsfläche der Ausgabeöffnung höchstens 4 mm² und vorzugsweise 3 mm² beträgt.

4. Sprühdose nach einem oder mehreren der vorgehenden Patentansprüche, **dadurch gekennzeichnet, daß** die Querschnittsfläche des Kanals zwischen dem Schließventil und der Ausgabeöffnung dieselbe Größe hat wie die Querschnittsfläche der Ausgabeöffnung.

5. Sprühdose nach einem oder mehreren der vorgehenden Patentansprüche, **dadurch gekennzeichnet, daß** die Ausgabevorrichtung derart konstruiert ist, daß die Mischung, wenn sie ausgegeben wird, überall zwischen dem Schließventil und der Ausgabeöffnung eine Komponente der Bewegungsrichtung in Richtung der Ausgabeöffnung hat, die in bezug auf die Sprühdose axial verläuft.

6. Sprühdose nach einem oder mehreren der vorgehenden Patentansprüche, **dadurch gekennzeichnet, daß** die Sprühdose eine Menge eines Schäumungsmittels enthält, die so groß ist, daß der Auslaufprozentsatz zwischen 100 und 250, vorzugsweise zwischen 110 und 175, beträgt.

7. Sprühdose nach einem oder mehreren der vorgehenden Patentansprüche, **dadurch gekennzeichnet, daß** das Treibmittel aus einer Gruppe ausgewählt ist, die Druckluft, Stickstoff oder eine Mischung von Druckluft und Stickstoff umfaßt.

8. Sprühdose nach einem oder mehreren der vorgehenden Patentansprüche, **dadurch gekennzeichnet, daß** das Schäumungsmittel und das Treibmittel gemeinsam von einer Mischung aus Stickoxid und Stickstoff gebildet werden.

9. Sprühdose nach Anspruch 8, **dadurch gekennzeichnet, daß** die Gasmischung 30 bis 80 Gewichtsprozent Stickoxid und 70 bis 20 Gewichtsprozent Stickstoff umfaßt, vorzugsweise 40 bis 60 Gewichtsprozent Stickoxid und 60 bis 40 Gewichtsprozent Stickstoff, und besonders bevorzugt ungefähr 50 Gewichtsprozent Stickoxid und 50 Gewichtsprozent Stickstoff.

10. Sprühdose nach einem oder mehreren der vorgehenden Patentansprüche, **dadurch gekennzeichnet, daß** die flüssige Mischung bei 1 Atmosphäre und 4°C wenigstens 70 Gewichtsprozent Milch, vorzugsweise wenigstens 80 Gewichtsprozent und besonders bevorzugt 90 Gewichtsprozent oder mehr Milch enthält.

11. Sprühdose nach Anspruch 10, **dadurch gekennzeichnet, daß** die Milch Magermilch ist.

12. Verfahren zum Zubereiten von Cappuccino, umfassend die folgenden Schritte:
- Sprühen der flüssigen Mischung aus einer Sprühdose nach einem oder mehreren der vorhergehenden Patentansprüche in einen Behälter mit einem Auslaufprozentsatz von 50-300, vorzugsweise zwischen 100 und 250 und noch weiter bevorzugt zwischen 110 und 175, um Milchschaum zu bilden,
- Füllen des Behälters mit einer gewünschten Menge an Kaffee, bevor die Milch gesprüht wird oder nachdem die Milch gesprüht worden ist.

## Revendications

1. Aérosol (1) pour distribuer de la mousse de lait, comprenant :
- un dispositif de distribution comprenant une soupape d'arrêt (8) et un passage de distribution (10) qui est disposé en aval de la soupape d'arrêt (8), vu dans la direction de sortie prévue de la mousse de lait, et qui comporte une ouverture de distribution (11), le volume de passage entre la soupape d'arrêt et l'ouverture de distribution étant au maximum de 200 mm³ et la superficie de la section de l'ouverture de distribution étant au moins de 2 mm²,
- une composition liquide qui comprend un produit laitier,
- un propulseur, comprenant un gaz qui ne se dissout sensiblement pas dans la composition liquide,
- une quantité d'un agent d'expansion qui est telle que le pourcentage d'épanchement de la composition lorsqu'elle est distribuée hors de l'aérosol est compris entre 50 et 300.

2. Aérosol selon la revendication 1, **caractérisé en ce que** le volume du passage entre la soupape d'arrêt et l'ouverture de distribution est d'au moins 10 mm³.

3. Aérosol selon une ou plusieurs des revendications précédentes, **caractérisé en ce que** la superficie de la section de l'ouverture de distribution est au maximum de 4 mm² et **en ce qu'**elle est, de préférence, de 3 mm².

4. Aérosol selon une ou plusieurs des revendications précédentes, **caractérisé en ce que** la superficie de la section du passage entre la soupape d'arrêt et l'ouverture de distribution a la même taille que celle de l'ouverture de distribution

5. Aérosol selon une ou plusieurs des revendications précédentes, **caractérisé en ce que** le dispositif de distribution est conçu de telle manière que la composition, lorsqu'elle est en cours de distribution, partout entre la soupape d'arrêt et l'ouverture de distribution, a une composante directionnelle de mouvement dans la direction de l'ouverture de distribution qui est axiale par rapport à l'aérosol.

6. Aérosol selon une ou plusieurs des revendications précédentes, **caractérisé en ce que** l'aérosol contient une quantité d'un agent d'expansion qui est telle que le pourcentage d'épanchement est compris entre 100 et 250, de préférence entre 110 et 175.

7. Aérosol selon une ou plusieurs des revendications précédentes, **caractérisé en ce que** le propulseur est sélectionné dans le groupe comprenant l'air comprimé, l'azote ou un mélange de ceux-ci.

8. Aérosol selon une ou plusieurs des revendications précédentes, **caractérisé en ce que** l'agent d'expansion et le propulseur sont formés conjointement par un mélange d'oxyde nitreux et d'azote.

9. Aérosol selon la revendication 8, **caractérisé en ce que** le mélange de gaz comprend entre 30% et 80% en poids d'oxyde nitreux et entre 70% et 20% en poids d'azote, de préférence entre 40% et 60% en poids d'oxyde nitreux et entre 60% et 40% en poids d'azote et, plus préférentiellement, environ 50% en poids d'oxyde nitreux et 50% en poids d'azote.

10. Aérosol selon une ou plusieurs des revendications précédentes, **caractérisé en ce que** la composition liquide comprend, à 1 atmosphère et à 4°C, au moins 70% en poids de lait, de préférence au moins 80% en poids et, plus préférentiellement, 90% en poids ou plus.

11. Aérosol selon la revendication 10, **caractérisé en ce que** le lait est du lait écrémé.

12. Procédé pour faire du capuccino, comprenant les étapes suivantes :
- pulvérisation de la composition liquide hors d'un aérosol selon une ou plusieurs des revendications précédentes dans un récipient, avec un pourcentage d'épanchement compris entre 50 et 300, de préférence entre 100 et 250 et plus préférentiellement entre 110 et 175, de manière à former une mousse de lait,
- remplissage du récipient avec une quantité souhaitée de café avant ou après la pulvérisation du lait.
